# EUROPÄISCHE PATENTSCHRIFT

(11) **EP 0 961 929 B1**
(45) Veröffentlichungstag und Bekanntmachung des Hinweises auf die Patenterteilung: **19.04.2006**
(21) Anmeldenummer: 97953740.4
(22) Anmeldetag: 04.12.1997
(51) Int. Cl.: G01N 21/64

(54) **LICHTABTASTVORRICHTUNG**
LIGHT-SCANNING DEVICE
DISPOSITIF DE BALAYAGE LUMINEUX

(30) Priorität: 24.02.1997 DE 19707226
(43) Veröffentlichungstag der Anmeldung: 08.12.1999
(60) Teilanmeldung: 05020027.8
(73) Patentinhaber: BODENSEEWERK PERKIN-ELMER GMBH, 88662 Überlingen (DE)
(72) Erfinder: WULF, Jürgen, D-88662 Überlingen (DE); STEINWAND, Michael, D-88696 Owingen (DE); KLEMM, Henry, D-88662 Überlingen (DE)
(74) Vertreter: Grünecker, Kinkeldey, Stockmair & Schwanhäusser Anwaltssozietät
(86) Internationale Anmeldenummer: PCT/EP1997/006793
(87) Internationale Veröffentlichungsnummer: WO 1998/038495

(56) Entgegenhaltungen:
- EP-A- 0 504 432
- EP-A- 0 753 779
- WO-A-96/09548
- US-A- 3 918 812
- US-A- 4 405 993

## Beschreibung

Die vorliegende Erfindung betrifft eine Lichtabtastvorrichtung zur Anregung und Detektion von Sekundärlicht, insbesondere von Fluoreszenzlicht, von einer Probe mit einer Lichtemissionsvorrichtung zur Aussendung von Anregungslicht mit einer für eine Sekundärlichtanregung auf oder in der Probe geeigneten Wellenlänge, einer Fokussierungsoptik zur Fokussierung des Anregungslichts auf die Probe, einer Probenhalterungsvorrichtung zur lösbaren Halterung der Probe, einer Nachweiseinheit mit einer Erfassungsoptik für das bei Anregung von der Probe emittierte Sekundärlicht und mit einer Detektorvorrichtung zur Umwandlung des Sekundärlichts in elektrische Signale, wobei die Nachweiseinheit und die Fokussierungsoptik zusammengekoppelt sind und ein erstes einander zugeordnetes Paar der Fokussierungsoptik und der Nachweiseinheit bilden.

Derartige Lichtabtastvorrichtungen werden beispielsweise für molekularbiologische oder gentechnische Untersuchungen verwendet. Dabei wird eine Vielzahl von zu untersuchenden Stoffen feldartig auf einem Träger aufgebracht und mit einem fluoreszierenden Markierungsstoff vorübergehend in Kontakt gebracht. Diejenigen zu untersuchenden Stoffe, die eine Affinität zum Markierungsstoff aufweisen, binden den Markierungsstoff an sich und können foglich zur Emission von Fluoreszenzlicht angeregt werden. Durch die Anregbarkeit der Fluoreszenz wird somit die Eigenschaft des zu untersuchenden Stoffs, den Markierungsstoff an sich zu binden, sichtbar, wodurch Rückschlüsse auf die Art des Probenstoffs gezogen werden können.

Bei mikrobiologischen oder gentechnischen Untersuchungen werden große Felder solcher mit Fluoreszenzstoffen markierter Stoffe mit Anregungslicht sequentiell abgetastet. Bei bisher bekannten Vorrichtungen erfolgte die Abtastung des die Probenstoffe haltenden Trägers mittels zweier im optischen Weg des Anregungslichts vorhandener Kippspiegel, die zwei zueinander senkrechte Drehachsen aufweisen. Wenn der Abtastlichtstrahl auf eine Stelle mit einer markierten und somit fluoreszierenden Probensubstanz trifft, wird Sekundärlicht ausgesendet, das von einer Nachweiseinheit mit einer Erfassungsoptik und einer Detektorvorrichtung erfaßt und in elektrische Signale umgewandelt wird.

Bei derartigen Vorrichtungen ist jedoch die Drehung der Kippspiegel zur Abtastung toleranzbehaftet, was aufgrund des langen Strahlwegs zu großen Ungenauigkeiten in der Ortsauflösung der Abtastung führt. Weiter ist es bei einer "Pre-Objective-Scanning"-Anordnung der Fokussierungsoptik (d.h. zwischen der Abtasteinheit und der Probe) notwendig, daß diese einen großen Durchmesser aufweist, um das durch die Abtastspiegel von der optischen Achse abgelenkte Lichtstrahlenbündel in die Probenebene abzubilden. Bei solchen Objektiven mit einem großen Durchmesser ist jedoch eine Korrektur für große Bildwinkel und eine gute Bildfeldebnung sehr aufwendig und folglich mit erhöhten Kosten verbunden.

WO 96/09548 beschreibt eine Vorrichtung und ein Verfahren zur Durchführung einer Analyse von Proben. Das System umfasst eine optisch transparente Scheibe, die rotierbar um eine zentrale Achse angebracht ist. Eine Lichtquelle ist oberhalb der Scheibe und ein Lichtdetektor ist unterhalb der Scheibe angebracht, wobei die optischen Achsen derselben derart eingerichtet sind, dass die gesamte nutzbare Oberfläche der Scheibe durch die Lichtquelle und den Detektor abgetastet werden kann. Die Scheibe ist mit einer Eichmarkierung ausgestattet, welche den Durchtritt eines Lichtstrahls unterbricht, wenn der Lichtstrahl über dieselbe läuft, wodurch die Abtastung relativ zu der Scheibe ausgerichtet werden kann.

EP-A 0 504 432 beschreibt ein Verfahren zur immunologischen quantitativen Analyse. Eine Analyseeinrichtung mit einer optischen Messeinrichtung umfasst eine Scheibe auf einem Rotationstisch. Ein optischer Messkopf wird entlang einer Zahnstange hin- und hergefahren, welche sich radial in Bezug auf die Scheibe erstreckt. Der optische Messkopf weist einen Laserlicht emittierenden Abschnitt und einen Laserlicht detektierenden Abschnitt auf. Von der Lichtquelle abgestrahltes Licht wird über einen Strahlteiler und eine Linse auf die auf der Scheibe befindliche Probe geführt. Wenn nicht lösliche Trägerpartikel Fluoreszenzlicht abstrahlen, wird ein Photodetektor als optische Messeinrichtung verwendet. Es kann ein Filter dazwischengeschaftet werden, um bestimmte Wellenlängen zu detektieren.

EP-A 0 753 779 beschreibt ein konfokales Mikroskop. Eine raumfest angeordnete Probe wird unter Verwendung einer rotierenden Platte, welche optische Elemente umfasst, analysiert. Die Einrichtung weist weiterhin eine ortsfeste Kamera zur Detektion von zu analysierendem Licht der Probe auf.

Es ist das Ziel der vorliegenden Erfindung, eine Lichtabtastvorrichtung zu verbessern, mit der eine verbesserte Ortsauflösung bei vereinzeltem Aufbau möglich ist. Dieses Ziel wird durch eine Lichtabtastvorrichtung zur Anregung und Detektion von Sekundärlicht gemäß Anspruch 1 und Anspruch 2 erreicht. Ausführungsformen der Erfindung sind in den abhängigen Ansprüchen niedergelegt.

Gemäß der Erfindung ist wenigstens ein zweites Paar aus Fokussierungsoptik und Nachweiseinheit vorgesehen, die wiederum zusammengekoppelt sind, wobei das erste und das zweite Paar der Fokussierungsoptik und der Nachweiseinheit mechanisch mittels einer starren Verbindung miteinander gekoppelt sind. Dadurch lässt sich die Abtastzeit insbesondere bei Verwendung großer Proben und hoher Auflösung beträchtlich verringern. Bei Verwendung von zwei Paaren aus Fokussierungsoptik und Nachweiseinheit wird die Abtastzeit der Probenfläche halbiert. Da die Paare der Fokussierungsoptik und der Nachweiseinheit mechanisch miteinander gekoppelt sind, werden Stellelemente zur radialen Verschiebung der Fokussierungsoptik eingespart, wodurch wiederum die Kosten der erfindungsgemäßen Lichtabtastvorrichtung verringert werden, und andererseits wird durch die starre mechanische Verbindung eine genauere Positionierung gewährleistet.

Vorteilhafterweise ist die Fokussierungsoptik radial bezüglich der Drehachse der Probenhalterung verschiebbar bzw. die Probenhalterung in radialer Richtung bezüglich der Drehachse der Fokussierungsoptik verschiebbar. Dadurch wird eine zweidimensionale Ortsauflösung mittels einer einfachen mechanischen Bewegung der Fokussierungsoptik bzw. des Probenhalters ohne Veränderung des Winkels der Strahlachse relativ zur Probenoberfläche erzielt. Daher wird auch in der zweiten Dimension die sehr gute Ortsauflösung erreicht. Auch in dieser Ausführungsform ist das zuvor erwähnte kostengünstige Objektiv mit geringem Durchmesser und geringem Aufwand in der Bildfeldkorrektur verwendbar.

Es ist weiterhin bevorzugt, dass die beiden Paare aus Fokussierungsoptik und Nachweiseinheit einen Abstand zueinander aufweisen, der gleich dem halben Radius der Gesamtabtastfläche ist.

Es ist weiterhin vorteilhaft, Lochblenden jeweils in einer Abbildungsebene einer Erfassungsoptik vor der entsprechenden Detektorvorrichtung vorzusehen. Dadurch kann ein Übersprechen zwischen den einzelnen Detektoren und eine Aufnahme von Streulicht aus der Umgebung des Anregungslichtflecks verhindert werden.

Schüeßlich können in der erfindungsgemäßen Lichtabtastvorrichtung mehrere Lichtquellen mit verschiedenen Emissionslichtwellenlängen und/oder Farbfilter unterschiedlicher Transmissionswellenlänge vor den einzelnen Detektorvorrichtungen vorgesehen werden, was die Flexibilität und Vielseitigkeit des Systems erhöht.

Weitere vorteilhafte Ausführungsformen gehen aus den Unteransprüchen hervor.

Nachfolgend wird die vorliegende Erfindung beispielhaft anhand eines bevorzugten Ausführungsbeispiels näher erläutert und beschrieben. In den begleitenden Zeichnungen zeigen:
- Fig. 1: eine schematische Ansicht eines Aufbaus einer erfindungsgemäßen Ausführungsform; und
- Fig. 2: eine schematische Darstellung einer weiteren Ausführungsform, welche nicht Gegenstand der vorliegenden Erfindung ist.

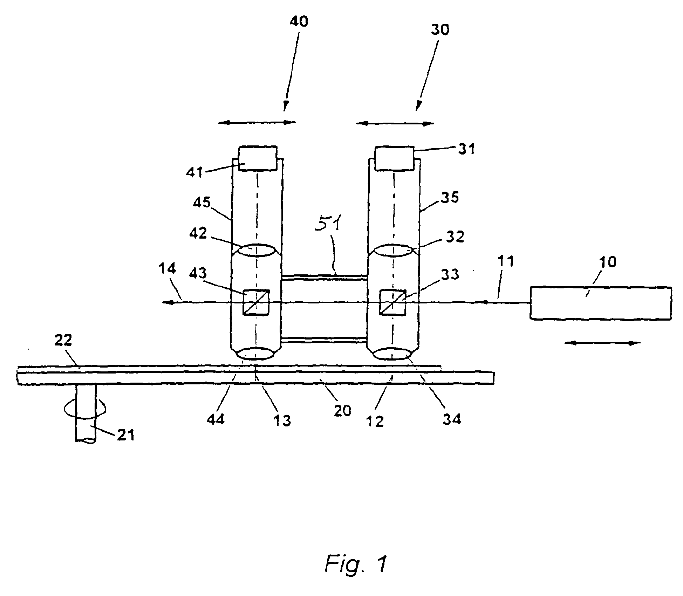

In Fig. 1 ist eine Ausführungsform der erfindungsgemäßen Lichtabtastvonichtung schematisch dargestellt. Eine Lichtemissionsvorrichtung 10, bei der es sich z.B. um einen Laser handelt, emittiert einen Lichtstrahl 11, der auf eine erste Einheit 30 mit einer Fokussierungsoptik für den Lichtstrahl und einer Erfassungsoptik für das Sekundärticht trifft. Die erste Einheit 30 umfaßt einen Trägerkörper 35 zur Halterung eines Strahlteilerwürfels 33, eines Fokussierungsobjektivs 34 zur Fokussierung des von der Lichtemissionsvorrichtung 10 emittierten Lichts auf die Probe, eines Erfassungsobjektivs 32 zur Erfassung und Sammlung von Sekundärlicht und eines Detektors 31. Der Trägerkörper 35 besitzt entlang des Ausbreitungswegs des Emissionslichtstrahlenbündels 11 Ausnehmungen, die einen Durchgang des Lichtstrahlenbündels 11 erlauben. Im optischen Weg des Lichtstrahlenbündels 11 ist der Strahlteiler 33 so angeordnet, daß das Strahlenbündel 11 teilweise im wesentlichen senkrecht reflektiert wird und anschließend entlang einer durch das Fokussierungsobjektiv 34 verlaufenden optischen Achse 12 verläuft. Der durch den Strahlteiler 33 transmittierte Teil des Strahlenbündels verläßt an einer entsprechenden zweiten Ausnehmung den Trägerkörper 35 und trifft auf eine zweite Einheit 40, die im wesentlichen zur ersten Einheit 30 identisch aufgebaut ist.

Die zweite Einheit 40 umfaßt somit einen Detektor 41, ein Erfassungsobjektiv 42 zur Erfassung und Sammlung des Sekundärlichts, einen Strahlteiler 43 und eine Fokussierungsoptik 44, die sämtlich in einem Trägerkörper 45 gehaltert sind. Der Trägerkörper 45 weist wieder geeignet angeordnete Ausnehmungen zum Eintritt und Austritt des von der Lichtemissionsvorrichtung 10 erzeugten, sich geradlinig ausbreitenden Strahlenbündels 11 auf.

In der gezeigten Ausführungsform sind die beiden Einheiten 30 und 40 mittels einer starren Verbindung 51 mechanisch gekoppelt. Wie durch die horizontalen Pfeile angezeigt ist, sind die Einheiten 30 und 40 gemeinsam entlang der Ausbreitungsrichtung des nicht abgelenkten, von der Emissionsvorrichtung 10 emittierten Strahlenbündels 11 verschiebbar.

Gegenüberliegend zu den beiden Fokussierungsobjektiven 34 und 44 ist eine Probe 22 angeordnet, die auf einer Probenhalterung 20 lösbar gehaltert ist. Die Probenhalterung 20 ist in der gezeigten Ausführungsform ein an einer Drehachse 21 gehalterter Drehteller. Zur Halterung der Probe 22 auf dem Drehteller 20 können nicht gezeigte Aufspannelemente oder Vakuumansaugleitungen vorhanden sein, wobei jedoch meist die normale Reibung der Probe auf der Unterlage genügt.

In der in Fig. 1 gezeigten Ausführungsform ist der Abstand zwischen den Einheiten 30 und 40 der halbe Radius des auf der Probe 22 abzutastenden Gebiets.

Der optische Weg des von der Lichtemissionsvorrichtung 10 emittierten Lichtstrahlenbündels 11 verläuft zuerst im wesentlichen parallel zur Oberfläche der Probe 22 und wird jeweils an den Strahlteilern 33 und 43 in eine Richtung im wesentlichen senkrecht zur Oberfläche der Probe 22 abgelenkt, um das Anregungslicht über die Fokussierungsobjektive 34 und 44 auf zwei Stellen der Probenoberfläche zu fokussieren. Das bei Fluoreszenz von der Probenoberfläche abgestrahlte Sekundärlicht geht in den oberen Halbraum (falls die Probenhalterung 20 absorbiert). Davon wird nur derjenige Teil für den Detektor genutzt, der von der Optik 34, 32 bzw. 44, 42 aufgenommen werden kann. Nach Sammlung durch die Fokussierungsobjektive 34 und 44 geht das Sekundärlicht zu den Strahlteilern 33 und 43 über. An den Strahlteilern 33 und 43 werden die zwischen der Probe 22 und den beiden Strahlteilern für das Anregungslicht und das Sekundärlicht , vereinten optischen Wege getrennt. Ein Teil des Sekundärlichts wird jeweils an den Strahlteilern 33 und 43 in Richtung der Lichtemissionsvorrichtung 10 reflektiert, während ein anderer Teil durch die Strahlteilerwürfel durchgeht und auf die jeweiligen Erfassungsobjektive 32 und 42 trifft, die das Sekundärlicht auf den entsprechenden Detektor 31 bzw. 41 abbilden.

Man kann einen polarisierenden Strahlteilerwürfel einsetzen, der ein polarisiertes Anregungslicht mit hoher Reflektivität in Richtung der Proben reflektiert. Die fluoreszierenden Moleküle sind statistisch ("random") verteilt und emittieren in alle Polarisationsrtchtungen. Daher wird in Richtung der Lichtemssionsvorrichtung 10 nur wenig reflektiert, während das meiste Licht durch den Strahlteiler geht.

In der gezeigten Ausführungsform bei Verwendung von zwei Einheiten 30 und 40 besitzen die Strahlteiler beispielsweise ein Aufteilungsverhältnis von 50:50.

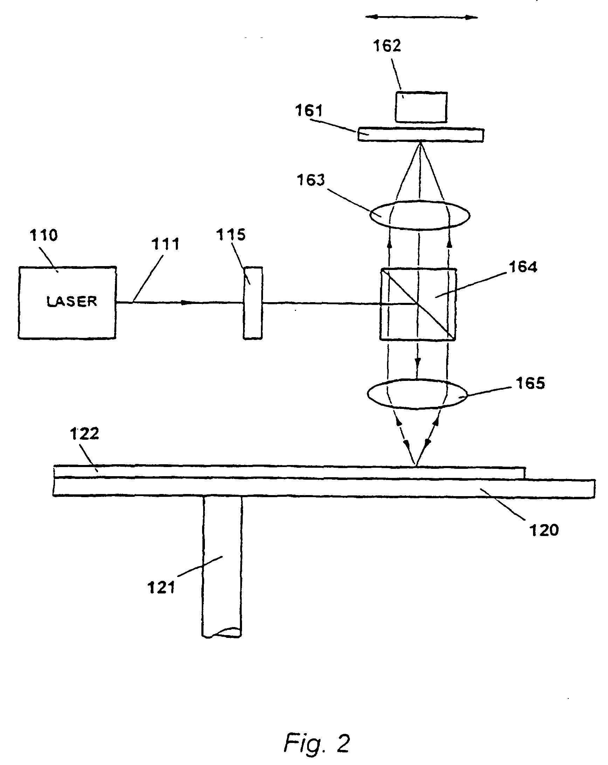

In Fig. 2 ist eine Ausführungsform einer Lichtabtastvorrichtung gezeigt welche nicht Gegenstand der vorliegenden Erfindung ist. Eine Lichtemissionsvorrichtung 110, z.B. ein Laser, erzeugt ein Anregungslichtstrahlenbündel 111, das auf eine schematisch dargestellte Strahlaufweitungsoptik 115 zur Aufweitung des Anregungslichtstrahlenbündels trifft. Die Strahlaufweitungsoptik 115 kann gleichzeitig zur Verbesserung der Strahlqualität einen Raumfilter enthalten. Anschließend folgt im optischen Weg des Anregungslichtstrahls ein dichroitischer Strahlteiler 164, der das Anregungslicht nahezu vollständig unter einem rechten Winkel in Richtung auf eine Probe 122 reflektiert. Zwischen dem Strahlteiler und der Probe 122 ist ein Fokussierungsobjektiv 165 angeordnet, das das Anregungslicht auf einen kleinen Fleck auf der Probe fokussiert.

Die Probe 122 ist wieder wie in der vorherigen Ausführungsform auf einem Drehteller 120 lösbar angebracht, der über eine Drehachse 121 drehbar gehaltert ist.

Im optischen Weg des von der Probe 122 emittierten Fluoreszenzlichts liegt zuerst die Fokussierungsoptik 165, auf die der dichroitische Strahlteiler 164 folgt, der so entworfen ist, daß das sich in der Wellenlänge vom Anregungslicht unterscheidende Fluoreszenzlicht nahezu vollständig transmittiert wird zu einer Erfassungsoptik 163, die das Fluoreszenzlicht auf eine Lochblende 161 fokussiert, hinter der ein Detektor 162 angeordnet ist.

Zusätzlich zu den in den Figuren 1 und 2 gezeigten Elementen der oben beschriebenen Ausführungsformen kann ein Sperrfilter zur Unterdrückung von Streulicht von der Lichtemissionsvonichtung vor den jeweiligen Detektoren vorgesehen sein. Durch das Sperrfilter und die Lochblende (die selbstverständlich auch vor den Detektoren 31 und 41 der in Fig. 1 gezeigten Ausführungsform vorsehbar ist) wird eine starke Unterdrükkung von gestreutem Anregungslicht erzielt und das Signal-zu-Rauschverhältnis deutlich verbessert. In der in Fig. 2 gezeigten Ausführungsform ist das Fokussierungsobjektiv 165 zusammen mit den Strahlteiler 164, dem Erfassungsobjektiv 163, der Lochblende 161 und dem Detektor 162 entlang der optischen Achse des Anregungslichtstrahlenbündels 111 zwischen Lichterzeugungsvorrichtung und Strahlteiler verschiebbar.

An der Lochblende 161 könnte auch ein Emissionsfilter eingesetzt werden, um die Wellenlänge des Emissionslichts zu selektionieren.

In den beiden gezeigten Ausführungsformen wäre es auch möglich, die Anordnung von Laser und Nachweisoptik unter entsprechender Umorientierung des Strahlteilers zu vertauschen. Weiter wäre es möglich, anstelle der Drehbewegung der Probenhalterung und der Linearbewegung der Fokussierungs- und Nachweiseinheit die Drehbewegung bei letzterer vorzusehen, und stattdessen die Probe linear verschiebbar anzuordnen, wodurch wiederum das gesamte Probengebiet abrasterbar wäre.

Bei den gezeigten Ausführungsformen wäre es weiter möglich, die Lichtemissionsvorrichtung und/oder die Nachweiseinheit(en) fixiert anzuordnen und das Licht über flexible Lichtleitfasem an die verschiebbare Fokussierungsoptik zu koppeln. Bei Verwendung von Lichtleitfasern zur Einkopplung des Anregungslichts und zur Übertragung des von der Probe emittierten Fluoreszenzüchts zum Detektor könnte der Strahlteiler entfallen. Eine derartige Verwendung von Lichtleitfasem bei der in Fig. 1 gezeigten Ausführungsform ermöglicht eine fixierte Anordnung der Detektoren 31 und 41 bezüglich der Verschiebebewegung des Fokussierungsobjektivs, wobei eine flexible Verbindung zwischen den Detektoren und der Fokussierungsoptik mittels der Lichtleitfasem hergestellt würde.

Aufgrund der Verwendung mehrerer Fokussierungs- und Nachweiseinheiten ist es auch möglich, unterschiedliche Wellenlängenfilter vor den jeweiligen Detektoren vorzusehen, wodurch verschiedene Fluorophore oder mehrere Wellenlängen des gleichen Fluoreszenzfarbstoffs simultan gemessen werden können. Andererseits kann man unterschiedliche Lichtemissionsvorrichtungen vorsehen, die jeweils über einen eigenen Strahlengang eingekoppelt werden und verschiedene Anregungswellenlängen zur Anregung verschiedener Fluoreszenzfarbstoffe aufweisen. Damit ist es ebenfalls möglich, die Probe bezüglich verschiedener Farbstoffe gleichzeitig zu vermessen.

Anstatt den in Fig. 1 und 2 gezeigten reflektiven Anordnungen wäre auch eine Anordnung zur Messung in Transmission denkbar. In diesem Fall würden die Strahlteilerwürfel jeweils entfallen und die Nachweiseinheiten auf der der Anregungsseite gegenübertiegenden Seite der Probe und des in diesem Fall transparenten Probenhalters angeordnet sein. Die Nachweisoptik wäre dann mit der Linearbewegung des oder der Anregungslichtstrahlenbündel auf der Probe 22 entsprechend gekoppelt.

Speziell bei Verwendung einer oder mehrerer Laserdioden als Lichtemissionsvorrichtung ist die Verwendung einer Strahlformungsoptik, wie symbolisch mit Bezugszeichen 115 in Fig. 2 angezeigt, vorteilhaft.

Die Probe ist mittels eines Mikrospotauftragungsverfahrens auf einem Träger aufgebracht, der auf der Probenhalterung lösbar angebracht ist. Der Träger kann eine kreisrunde Scheibe sein oder auch eine beliebige andere flache Form besitzen. Zur Probenaufgabe auf den Träger werden Mikrodosiertechniken, z.B. unter Verwendung einer Mikrodroppiezotechnologie, verwendet. Damit ist es möglich, einzelne Spotproben im Bereich von typischerweise 30 bis 100 µm Durchmesser aufzutragen.

Die Erfindung schafft den wesentlichen Vorteil, daß die Positionierung des Abtastlichtstrahlenbündels auf der Probe aufgrund der Rotationsbewegung genauer steuerbar ist als mittels einer Verkippung der Kippspiegel gemäß dem Stand der Technik, bei denen eine Verstärkung einer Positionstoleranz wie bei einem Spiegelgalvanometer auftrat. Durch die Verwendung mehrerer Detektoren wird die Abtastzeit wesentlich verkürzt, wobei die starre Verbindung der Abbildungs- und Erfassungsoptiken zu einer Verbesserung der Positionierung führt. Die konfokal vor den Detektoren angeordneten Lochblenden verhindem das Übersprechen der den beiden Detektoren zugeordneten Kanäle und unterdrücken Streulicht aus der Umgebung des Anregungslichtspots, wodurch das Signal-zu-Rauschverhältnis verbessert wird. Die Möglichkeit, mehrere Lichtemissionsvorrichtungen und verschiedene Filter einzusetzen, erhöht die Flexibilität des Systems.

## Patentansprüche

1. Lichtabtastvorrichtung zur Anregung und Detektion von Sekundärlicht, insbesondere von Fluoreszenzlicht, auf einer Probe (22) mit
einer Lichtemissionsvorrichtung (10) zur Aussendung von Anregungslicht (11) mit einer für eine Sekundärlichtanregung auf oder in der Probe (22) geeigneten Wellenlänge,
einer Fokussierungsoptik (34, 44) zur Fokussierung des Anregungslichts auf ein Teilgebiet der Probe (22),
einer Probenhalterungsvorrichtung (20) zur lösbaren Halterung der Probe (22), und
einer Nachweiseinheit mit einer Erfassungsoptik (32, 42) für das bei Anregung von der Probe emittierte Sekundärlicht und mit einer Detektorvorrichtung (31, 41) zur Umwandlung des erfassten und abgebildeten Sekundärlichts in elektrische Signale, wobei die Nachweiseinheit und die Fokussierungsoptik (34, 44) zusammengekoppelt sind und ein erstes einander zugeordnetes Paar der Fokussierungsoptik (34, 44) und der Nachweiseinheit bilden und wenigstens teilweise einen gemeinsamen optischen Weg aufweisen,
wobei die Probenhalterungsvorrichtung (20) um eine Drehachse (21) drehbar ist zur Drehung der Probehalterung relativ zu dem Anregungslicht derart, dass unterschiedliche Teilgebiete der Probe (22) mit dem Anregungslicht zur Aussendung von Sekundärlicht anregbar sind,
**dadurch gekennzeichnet, dass**
wenigstes ein zweites Paare aus Fokussierungsoptik (34, 44) und Nachweiseinheit vorgesehen ist die wiederum zusammengekoppelt sind und das erste und das zweite Paar der Fokussierungsoptik (34, 44) und der Nachweiseinheit mechanisch mittels einer starren Verbindung (51) miteinander gekoppelt sind.

2. Lichtabtastvorrichtung zur Anregung und Detektion von Sekundärlicht, insbesondere von Fluoreszenzlicht, auf einer Probe (22) mit
einer Lichtemissionsvorrichtung (10) zur Aussendung von Anregungslicht (11) mit einer für eine Sekundärlichtanregung auf oder in der Probe (22) geeigneten Wellenlänge,
einer Fokussierungsoptik (34, 44) zur Fokussierung des Anregungslichts auf ein Teilgebiet der Probe (22),
einer Probenhalterungsvorrichtung (20) zur lösbaren Halterung der Probe (22), und
einer Nachweiseinheit mit einer Erfassungsoptik (32, 42) für das bei Anregung von der Probe emittierte Sekundärlicht und mit einer Detektorvorrichtung (31, 41) zur Umwandlung des erfassten und abgebildeten Sekundärlichts in elektrische Signale, wobei die Nachweiseinheit und die Fokussierungsoptik (34, 44) zusammengekoppelt sind und ein erstes einander zugeordnetes Paar der Fokussierungsoptik (34, 44) und der Nachweiseinheit bilden und wenigstens teilweise einen gemeinsamen optischen Weg aufinreisen,
wobei die Fokussierungsoptik (34, 44) drehbar gehaltert ist zur Führung des Anregungslichts entlang eines Kreisbogens auf der Probe,
**dadurch gekennzeichnet, dass** wenigstens ein zweites Paar aus Fokussierungsoptik (34, 44) und Nachweiseinheit vorgesehen ist, die wiederum zusammengekoppelt sind, und das erste und das zweite Paar der Fokussierungsoptik (34, 44) und der Nachweiseinheit mechanisch mittels einer starren Verbindung (51) miteinander gekoppelt sind.

3. Lichtabtastvorrichtung gemäß Anspruch 1, wobei die Fokussierungsoptik (34, 44) radial bezüglich der Drehachse (21) der Probenhalterungsvorrichtung (20) verschiebbar ist.

4. Lichtabtastvorrichtung gemäß Anspruch 2, wobei die Probenhalterung in radialer Richtung bezüglich der Drehachse der Fokussierungsoptik (34, 44) verschiebbar ist.

5. Lichtabtastvorrichtung gemäß Anspruch 4, wobei die Fokussierungsoptik (34, 44) und die Erfassungsoptik (32, 42) der Nachweiseinheit einen gemeinsamen Strahlteiler (33, 43) aufweisen, um die optischen Wege des Anregungslichts und des Sekundärlichts zu vereinen bzw. zu trennen.

6. Lichtabtastvorrichtung gemäß Anspruch 5 , wobei der Strahlteiler (33, 43) ein dichroitischer Strahlteiler ist, der entweder das Anregungslicht oder das Sekundärlicht reflektiert und das andere Licht im wesentlichen transmittiert.

7. Lichtabtastvorrichtung gemäß Anspruch 5 , wobei der Strahlteiler (33, 43) das auf ihn einfallende Licht in einem Verhältnis von 50:50 reflektiert und transmittiert.

8. Lichtabtastvorrichtung gemäß einem der Ansprüche 1 oder 2, wobei das erste und das zweite Paar der Fokussierungsoptik und der Nachweiseinheit einen Abstand zueinander aufweisen, welcher einen halben Radius einer Gesamtabtastfläche festlegt.

9. Lichtabtastvorrichtung gemäß einem der vorhergehenden Ansprüche, wobei vor den Detektorvorrichtungen jeweils eine Lochblende in einer Abbildungsebene der Erfassungsoptik (32, 42) für das Sekundärlicht vorgesehen ist.

10. Lichtabtastvorrichtung gemäß einem der vorhergehenden Ansprüche, wobei ein Sperrfilter zur Unterdrückung des Anregungslichts vor den Detektorvorrichtungen (31, 41) vorgesehen ist.

11. Lichtabtastvorrichtung gemäß einem der vorhergehenden Ansprüche, wobei die Detektorvorrichtungen (31, 41) und/oder die Lichtemissionsvorrichtung (10) fixiert vorgesehen sind.

12. Lichtabtastvorrichtung gemäß Ansprüchen 11, wobei die Detektorvorrichtungen (31, 41) und/oder die Lichtemissionsvorrichtung (10) mit der Erfassungsoptik bzw. der Fokussierungsoptik (34, 44) zur Lichtübertragung über Lichtleitfasem gekoppelt sind.

13. Lichtabtastvorrichtung gemäß einem der vorhergehenden Ansprüche, wobei ein Farbfilter zur Transmission einer bestimmten Wellenlänge des Sekundärlichts vor den Detektorvorrichtungen (31, 41) vorgesehen ist.

14. Lichtabtastvorrichtung gemäß einem der vorhergehenden Ansprüche, wobei die Lichtemissionsvorrichtung (10) eine Vielzahl von Laserdioden mit jeweils unterschiedlicher Ausgangswellenlänge umfasst.

## Claims

1. A light scanning device for exciting and detecting secondary light, especially fluorescent light, on a sample (22), comprising
a light emission device (10) for emitting exciting light (11) with a wavelength suitable for exciting secondary light on or in said sample (22),
a focussing optics (34, 44) for focussing the exciting light on a subarea of said sample (22),
a sample holding device (20) for releasably holding the sample (22), and
a detection unit comprising a detection optics (32, 42) for the secondary light emitted by the sample in response to excitation and a detector device (31, 41) for converting the detected and imaged secondary light into electric signals, wherein the detection unit and the focussing optics (34, 44) are coupled together and define a first associated pair of said focussing optics (34, 44)and said detection unit and have, at least partially, a common optical path,
wherein the sample holding device (20) is adapted to be rotated about an axis of rotation (21) for rotating the sample holder relative to the exciting light in such a way that different subareas of said sample (22) can be excited by means of the exciting light so as to emit secondary light,
**characterized in that**
there is provided at least one second pair of focussing optics (34, 44) and detection unit, which are again coupled together, and that said first and said second pair of focussing optics (34, 44) and detection unit are mechanically coupled by means of a rigid connection (51).

2. A light scanning device for exciting and detecting secondary light, especially fluorescent light, on a sample (22), comprising
a light emission device (10) for emitting exciting light (11) with a wavelength suitable for exciting secondary light on or in said sample (22),
a focussing optics (34, 44) for focussing the exciting light on a subarea of said sample (22),
a sample holding device (20, 21) for releasably holding the sample (22),and
a detection unit comprising a detection optics (32, 42) for the secondary light emitted by the sample in response to excitation and a detector device (31, 41) for converting the detected and imaged secondary light into electric signals, wherein the detection unit and the focussing optics (34, 44) are coupled together and define a first associated pair of said focussing optics (34, 44)and said detection unit and have, at least partially, a common optical path,
wherein the focussing optics (34, 44) is rotatably supported so as to conduct the exciting light along a circular arc on the sample,
**characterized in that** there is provided at least one second pair of focussing optics (34, 44) and detection unit, which are again coupled together, and that said first and said second pair of focussing optics (34, 44) and detection unit are mechanically coupled by means of a rigid connection (51).

3. A light scanning device according to claim 1, wherein the focussing optics (34, 44) is adapted to be radially displaced relative to the axis of rotation (21) of the sample holding device (20).

4. A light scanning device according to claim 2, wherein the sample holder is adapted to be displaced in the radial direction relative to the axis of rotation of the focussing optics (34, 44).

5. A light scanning device according to claim 4, wherein the focussing optics (34, 44) and the detection optics (32, 42) of the detection unit have a common beam splitter (33, 43) so as to unite or separate the optical paths of the excitation light and of the secondary light.

6. A light scanning device according to claim 5, wherein the beam splitter (33, 43) is a dichroic beam splitter which reflects either the exciting light or the secondary light and which essentially transmits the respective other light.

7. A light scanning device according to claim 5, wherein the beam splitter (33, 43) reflects the light incident thereon in a ratio of 50:50.

8. A light scanning device according to one of the claims 1 or 2, wherein said first and said second pair of focussing optics and detection unit extend at a distance from one another, which defines half the radius of the total area scanned.

9. A light scanning device according to one of the preceding claims, wherein a pinhole diaphragm is arranged in front of each detector device in an imaging plane of the detection optics (32, 42) for the secondary light.

10. A light scanning device according to one of the preceding claims, wherein a blocking filter for suppressing the exciting light is arranged in front of the detector devices (31, 41).

11. A light scanning device according to one of the preceding claims, wherein the detector devices (31,41) and/or the light emission device (10) are arranged in a fixed manner.

12. A light scanning device according to claim 11, wherein the detector devices (31, 41) and/or the light emission device (10) are coupled to the detection optics and the focussing optics (34, 44), respectively, for transmitting light via optical fibres.

13. A light scanning device according to one of the preceding claims, wherein a colour filter is provided in front of the detector devices (31, 41) so as to transmit a specific wavelength of the secondary light.

14. A light scanning device according to one of the preceding claims, wherein the light emission device (10)comprises a plurality of laser diodes each having a different output wavelength.

## Revendications

1. Dispositif de balayage lumineux pour l'excitation et la détection d'une lumière secondaire, notamment d'une lumière fluorescente sur un échantillon (22) avec
un dispositif d'émission lumineuse (10) pour émettre une lumière d'excitation (11) avec une longueur d'onde adaptée pour une excitation de lumière secondaire sur ou dans l'échantillon (22),
une optique de focalisation (34, 44) pour la focalisation de la lumière d'excitation sur une zone partielle de l'échantillon (22),
un dispositif porte-échantillons (20) pour la fixation amovible de l'échantillon (22), et
une unité d'identification avec une optique d'acquisition (32, 42) de la lumière secondaire émise lors de l'excitation de l'échantillon et avec un dispositif de détecteurs (31, 41) pour la transformation de la lumière secondaire détectée et reproduite en signaux électriques, l'unité d'identification et l'optique de focalisation (34, 44) étant couplées et formant une première paire mutuellement associée constituée par l'optique de focalisation (34, 44) et l'unité d'identification et comportant au moins partiellement un trajet optique commun,
le dispositif porte-échantillons (20) étant rotatif autour d'un axe de rotation (21) pour tourner le porte-échantillons par rapport à la lumière d'excitation, de façon à ce que des zones partielles différentes (22) de l'échantillon puissent être excitées par la lumière d'excitation pour l'émission de lumière secondaire,
**caractérisé en ce qu'**on a prévu au moins une deuxième paire constituée d'une optique de focalisation (34, 44) et d'une unité d'identification, qui sont également couplées et **en ce que** la première et la deuxième paire constituées de l'unité de focalisation (34, 44) et de l'unité d'identification sont couplées mécaniquement au moyen d'une liaison rigide (51).

2. Dispositif de balayage lumineux pour l'excitation et la détection d'une lumière secondaire, notamment d'une lumière fluorescente sur un échantillon (22), avec
un dispositif d'émission lumineuse (10) pour émettre de la lumière d'excitation (11) avec une longueur d'onde adaptée pour une excitation de lumière secondaire sur ou dans l'échantillon (22),
une optique de focalisation (34, 44) pour la focalisation de la lumière d'excitation sur une zone partielle de l'échantillon (22),
un dispositif porte-échantillons (20) pour la fixation amovible de l'échantillon (22), et
une unité d'identification avec une optique d'acquisition (32, 42) de la lumière secondaire émise lors de l'excitation de l'échantillon et avec un dispositif de détecteurs (31, 41) pour la transformation de la lumière secondaire détectée et reproduite en signaux électriques, l'unité d'identification et l'optique de focalisation (34, 44) étant couplées et formant une première paire mutuellement associée constituée par l'optique de focalisation (34, 44) et l'unité d'identification et comportant au moins partiellement un trajet optique commun,
l'optique de focalisation (34, 44) étant fixée de façon rotative pour guider la lumière d'excitation le long d'un arc de cercle sur l'échantillon,
**caractérisé en ce qu'**on a prévu au moins une deuxième paire constituée d'une optique de focalisation (34, 44) et d'une unité d'identification, qui sont également couplées et **en ce que** la première et la deuxième paire constituées de l'unité de focalisation (34, 44) et de l'unité d'identification sont couplées mécaniquement au moyen d'une liaison rigide (51).

3. Dispositif de balayage lumineux selon la revendication 1, l'optique de focalisation (34, 44) étant déplaçable en direction radiale par rapport à l'axe de rotation (21) du dispositif porte-échantillons (20).

4. Dispositif de balayage lumineux selon la revendication 2, le porte-échantillons étant déplaçable en direction radiale par rapport à l'axe de rotation de l'optique de focalisation (34, 44).

5. Dispositif de balayage lumineux selon la revendication 4, l'optique de focalisation (34, 44) et l'optique d'acquisition (32, 42) de l'unité d'identification comportant un séparateur de faisceaux commun (33, 43), pour réunir ou pour séparer les trajets optiques de la lumière d'excitation et de la lumière secondaire.

6. Dispositif de balayage lumineux selon la revendication 5, le séparateur de faisceaux (33, 43) étant un séparateur de faisceaux dichroïque, qui réfléchit soit la lumière d'excitation ou la lumière secondaire et qui transmet sensiblement l'autre lumière.

7. Dispositif de balayage lumineux selon la revendication 5, le séparateur de faisceaux (33, 43) réfléchissant et transmettant la lumière incidente sur lui selon un rapport de 50 : 50.

8. Dispositif de balayage lumineux selon l'une quelconque des revendications 1 ou 2, la première et la deuxième paire constituée de l'unité optique de focalisation et de l'unité d'identification présentant une distance mutuelle, qui détermine un demi rayon d'une surface totale de balayage.

9. Dispositif de balayage lumineux selon l'une quelconque des revendications précédentes, un diaphragme à trou étant respectivement prévu à l'avant des dispositifs de détecteurs, dans un plan de reproduction de l'optique d'acquisition (32, 42) pour la lumière secondaire.

10. Dispositif de balayage lumineux selon l'une quelconque des revendications précédentes, un filtre d'arrêt étant prévu pour supprimer la lumière d'excitation à l'avant des dispositifs de détecteurs (31, 41).

11. Dispositif de balayage lumineux selon l'une quelconque des revendications précédentes, les dispositifs de détecteurs (31, 41) et/ou le dispositif d'émission lumineuse (10) étant prévus de façon fixée.

12. Dispositif de balayage lumineux selon la revendication 11, les dispositifs de détecteurs (31, 41) et/ou le dispositif d'émission lumineuse (10) étant couplés avec l'optique d'acquisition ou avec l'optique de focalisation (34, 44), pour la transmission de lumière par l'intermédiaire de fibres optiques.

13. Dispositif de balayage lumineux selon l'une quelconque des revendications précédentes, un filtre coloré étant prévu à l'avant des dispositifs de détecteurs (31, 41) pour la transmission d'une longueur d'onde définie de la lumière secondaire.

14. Dispositif de balayage lumineux selon l'une quelconque des revendications précédentes, le dispositif d'émission lumineuse (10) comportant une pluralité de diodes laser avec pour chacunes des longueurs d'onde de sortie différentes.
